# FASCICULE DE BREVET EUROPEEN

(11) **EP 4 419 420 B1**
(45) Date de publication et mention de la délivrance du brevet: **24.12.2025**
(21) Numéro de dépôt: 22789243.7
(22) Date de dépôt: 19.10.2022
(51) Int. Cl.: B64D 11/00, B64D 11/06

(54) **SYSTÈME DE DÉPLOIEMENT D'UN RIDEAU D'ISOLATION POUR LA CRÉATION D'UN ESPACE DE REPOS À L'INTÉRIEUR D'UNE CABINE D'AÉRONEF**
SYSTEM ZUM ENTFALTEN EINES TRENNVORHANGS ZUR ERZEUGUNG EINES RUHERAUMS IN EINER FLUGZEUGKABINE
SYSTEM FOR DEPLOYING A SEPARATION CURTAIN TO CREATE A RESTING SPACE INSIDE AN AIRCRAFT CABIN

(30) Priorité: 20.10.2021 FR 2111118
(43) Date de publication de la demande: 28.08.2024
(73) Titulaire: Safran Seats, 78370 Plaisir (FR)
(72) Inventeur: GLAIN, Arthur K., 77550 Moissy-Cramayel (FR)
(74) Mandataire: Marconnet, Sébastien
(86) Numéro de dépôt international: PCT/EP2022/079026
(87) Numéro de publication internationale: WO 2023/066960

(56) Documents cités:
- EP-A1- 3 643 615
- US-A1- 2021 163 139

## Description

La présente invention porte sur un système de déploiement d'un rideau d'isolation pour la création d'un espace de repos à l'intérieur d'une cabine d'aéronef, en particulier une cabine d'avion.

On connaît des dispositifs permettant de créer un espace de repos autour d'un siège de l'avion, notamment un siège de la classe "Affaires" (ou "Business Class" en anglais), afin de permettre aux membres d'équipage de se reposer au sein d'une cabine d'avion parmi les passagers.

Les solutions actuellement employées consistent à tendre des rideaux autour d'un siège de classe Affaires. Ces derniers protègent du vis-à-vis avec les autres passagers durant les phases de sommeil. Ces rideaux protègent également de la lumière et de la promiscuité avec les autres passagers pour offrir davantage de confort et d'intimité aux membres d'équipage.

Ces rideaux posent toutefois des problèmes esthétiques ainsi que des problèmes d'intégration au sein de la cabine d'avion. En effet, les rideaux nécessitent l'installation de modules encombrants et disgracieux, tels que des rails apparents qui dégradent la qualité perçue en cabine par les passagers.

Par ailleurs, l'utilité de ces rideaux n'est pas clairement communiquée aux passagers. Cela peut amener les passagers à s'interroger sur leur fonction dans la cabine. Les passagers peuvent notamment se demander si ces rideaux sont utilisés pour cacher un siège cassé ou former une tente médicale. La curiosité de certains passagers pouvant être tentés de regarder derrière les rideaux est susceptible de déranger le repos des membres d'équipage. Il peut en résulter des situations gênantes autant pour les passagers que pour les membres d'équipage.

Ainsi, les systèmes à rideaux connus ne permettent pas aux membres d'équipage de dormir de manière confortable et isolée des autres passagers au sein de la cabine. Ces systèmes ne répondent pas non plus aux critères qualitatifs en termes de finition et d'esthétisme pour une cabine de type classe Affaires.

Le document EP3643615 décrit une unité de siège d'aéronef formée par une zone de siège et un rideau de séparation réglable entre un état ouvert et un état fermé. Le rideau de séparation est destiné à séparer la zone de siège par rapport au reste d'une cabine, en particulier par rapport au couloir de circulation. Le rideau de séparation est déployé verticalement depuis un compartiment de stockage situé en partie supérieure d'une cabine d'aéronef.

Le document US2021163139 décrit un arrangement de sièges, notamment destiné à être installé dans une cabine d'avion comprenant au moins une unité de siège avant et au moins une unité de siège arrière situées l'une derrière l'autre selon un axe longitudinal de la cabine d'avion et comportant respectivement au moins un siège apte à passer d'une position "assise" à une position "couchette", un passage transversal disposé entre l'unité de siège avant et l'unité de siège arrière pour permettre un accès à un couloir de circulation, et des moyens de fermeture au moins en partie flexibles mobiles entre une position rangée dans laquelle les moyens de fermeture sont dégagés du passage et une position déployée dans laquelle les moyens de fermeture obturent le passage.

L'invention vise à remédier efficacement à au moins un des inconvénients précités en proposant un ensemble pour une cabine d'aéronef comportant:
- au moins une unité de siège comportant un siège et une coque d'intimité s'étendant au moins en partie autour du siège,
- au moins un rideau d'isolation, et
- un compartiment de stockage délimitant un volume interne,
- un système de déploiement du rideau d'isolation configuré pour faire prendre sélectivement au rideau d'isolation:
   - un état stocké dans lequel ledit rideau d'isolation est disposé majoritairement à l'intérieur du volume interne du compartiment de stockage, et
   - un état déployé dans lequel ledit rideau d'isolation est disposé majoritairement à l'extérieur du volume interne du compartiment de stockage de façon à délimiter au moins en partie un espace clos de repos autour de l'unité de siège,
   - le compartiment de stockage est configuré pour être situé en partie supérieure de ladite cabine d'aéronef, et le système de déploiement du rideau d'isolation est disposé à l'intérieur du volume interne du compartiment de stockage de sorte qu'à l'état déployé, le rideau d'isolation s'étend verticalement depuis le compartiment de stockage de façon à délimiter au moins en partie l'espace clos,
   - le rideau d'isolation est apte à se déployer verticalement depuis le compartiment de stockage jusqu'à un bord supérieur de la coque d'intimité, de sorte qu'au moins une portion d'une paroi délimitant l'espace clos est formée en partie haute par le rideau d'isolation et en partie basse par la coque d'intimité.

L'invention permet ainsi au rideau d'isolation de s'intégrer harmonieusement dans une cabine d'aéronef sans dégrader l'aspect esthétique ou la qualité perçue d'une cabine de type classe Affaires. En effet, l'invention ne nécessite pas l'ajout de modules encombrants et visuellement disgracieux en cabine, tel que la pose de rails apparents. En outre, lorsque la solution n'est pas déployée, le rideau d'isolation peut être discrètement rangé dans le compartiment sans gêner les passagers. L'invention permet également d'améliorer la séparation entre l'espace de repos réservé au personnel de bord et le reste de la cabine. Les conditions de repos du personnel de bord sont donc également améliorées. L'invention présente également un caractère économique, dans la mesure où elle est simple à produire et n'induit quasiment aucune modification de la cabine.

Selon une réalisation de l'invention, le rideau d'isolation présente une forme épousant celle d'un bord supérieur de la coque d'intimité.

Selon une réalisation de l'invention, le rideau d'isolation est lesté dans sa partie basse.

Selon une réalisation de l'invention, le système de déploiement comporte un enrouleur autour duquel le rideau d'isolation est majoritairement enroulé à l'état stocké.

Selon une réalisation de l'invention, un dispositif d'actionnement est apte à déclencher le passage du rideau d'isolation d'un état à l'autre.

Selon une réalisation de l'invention, le dispositif d'actionnement comporte une gâchette à tirer pour faire passer le rideau d'isolation de l'état stocké à l'état déployé.

Selon une réalisation de l'invention, le dispositif d'actionnement comporte une manivelle.

Selon une réalisation de l'invention, le dispositif d'actionnement comporte un système électrique muni d'un moteur électrique permettant au rideau d'isolation de descendre de façon automatique à l'état déployé et de remonter de façon automatique à l'état stocké, ledit système électrique étant apte à être commandé par un interrupteur disposé à proximité du siège ou par une télécommande.

Selon une réalisation de l'invention, le rideau d'isolation comporte un marquage sous forme d'un texte et/ou d'un symbole indiquant que le rideau d'isolation délimite un espace de repos réservé à des membres d'équipage.

L'invention a également pour objet une cabine d'aéronef comportant l'ensemble tel que défini précédemment.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en perspective partielle d'une cabine d'avion équipée d'un système de déploiement d'un rideau d'isolation selon la présente invention intégré dans un compartiment à bagages;
[Fig. 2] La figure 2 est une vue détaillée d'une partie lestée d'un rideau d'isolation selon la présente invention;
[Fig. 3] La figure 3 est une vue en perspective d'un enrouleur pouvant être utilisé avec le système de déploiement d'un rideau d'isolation selon la présente invention;
[Fig. 4] La figure 4 est une vue en perspective d'une manivelle et d'un enrouleur à sangle pouvant être utilisé avec le système de déploiement d'un rideau d'isolation selon la présente invention;
[Fig. 5a] [Fig. 5b] Les figures 5a et 5b sont des vues de côté illustrant le déploiement d'un rideau permettant de délimiter un espace clos de repos autour d'une unité de siège;
[Fig. 6] La figure 6 est une vue en perspective d'un rideau d'isolation réalisé dans un matériau rembourré qui se trouve à l'état déployé;
[Fig. 7] La figure 7 est une vue en perspective d'un autre mode de réalisation de l'invention**,** non revendiqué, basé sur l'intégration dans la cabine d'avion d'un rail de guidage et d'un compartiment de stockage vertical;
[Fig. 8] La figure 8 est une vue en perspective montrant**,** à titre de mode de réalisation non revendiqué, par transparence l'implantation d'un rail de guidage d'un rideau d'isolation en partie haute de la cabine d'avion;
[Fig. 9] La figure 9 est une vue en perspective illustrant**,** à titre de mode de réalisation non revendiqué, un déploiement d'un rideau d'isolation suivant un rail de guidage;
[Fig. 10] La figure 10 est une vue en perspective illustrant**,** à titre de mode de réalisation non revendiqué, une fermeture du rideau depuis un espace clos créé par son déploiement.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

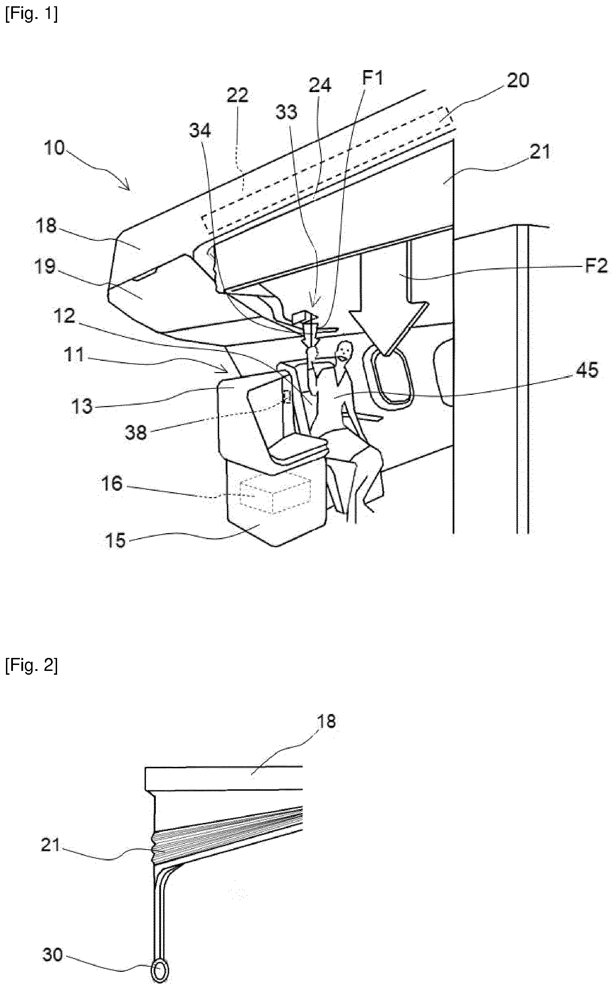

La figure 1 montre une cabine d'avion 10 comportant une pluralité d'unités de sièges 11 par exemple de type classe Affaires. Classiquement, la cabine d'avion comporte plusieurs rangées d'unités de sièges 11 situées les unes derrière les autres. Une seule unité de siège 11 a toutefois été représentée sur la figure afin de faciliter la compréhension de l'invention. Une unité de siège 11 comporte un siège 12 et une coque d'intimité 13 s'étendant au moins en partie autour du siège 12 pour isoler le passager de l'environnement extérieur.

Le siège 12 pourra offrir à un passager différentes positions de confort, d'une position "assise" jusqu'à une position "lit", dans laquelle le siège 12 définit un plan de couchage sensiblement horizontal pour que le passager puisse s'allonger. Des positions intermédiaires de confort sont aussi proposées, telles que la position "relax" dans laquelle un dossier du siège 12 est fortement incliné. Généralement, ces positions intermédiaires sont obtenues par l'inclinaison du dossier pivotant autour d'un axe horizontal et perpendiculaire à un axe d'extension du siège 12. Le passager peut rester sur le siège 12 lors de transitions entre les différentes positions.

L'unité de siège 11 pourra également comporter un meuble latéral 15 ayant une face supérieure sur lequel le passager pourra poser des objets. Le meuble latéral 15 pourra être muni d'un logement de pieds 16 destiné à recevoir les pieds d'un passager d'un siège arrière correspondant, notamment lorsque le siège arrière est en position "lit". Ainsi, l'ouverture du logement de pieds 16 est dirigée vers le siège 12 situé immédiatement derrière le meuble latéral 15 de l'unité de siège 11.

Par ailleurs, un compartiment de stockage 18, tel qu'un compartiment à bagages, est situé en partie supérieure de la cabine d'avion 10. Le compartiment de stockage 18 délimite un volume interne 22. Le compartiment de stockage 18 s'étend longitudinalement suivant une direction horizontale à l'intérieur de la cabine d'avion 10.

Un système de déploiement 20 d'un rideau d'isolation 21 est intégré dans le compartiment à bagages 18. Le système de déploiement 20 est disposé à l'intérieur du volume interne 22 du compartiment 18. Pour permettre le passage du rideau 21 à l'extérieur du compartiment 18, une ouverture 24 est ménagée dans une paroi inférieure du compartiment 18. Le cas échéant, il sera possible de condamner un tiroir 19 du compartiment 18 afin d'éviter qu'un passager puisse accéder au système de déploiement 20 du rideau 21.

Le système de déploiement 20 du rideau 21 est configuré pour faire prendre sélectivement au rideau 21 un état stocké et un état déployé. A l'état stocké, le rideau 21 est disposé majoritairement à l'intérieur du volume interne 22 du compartiment 18.

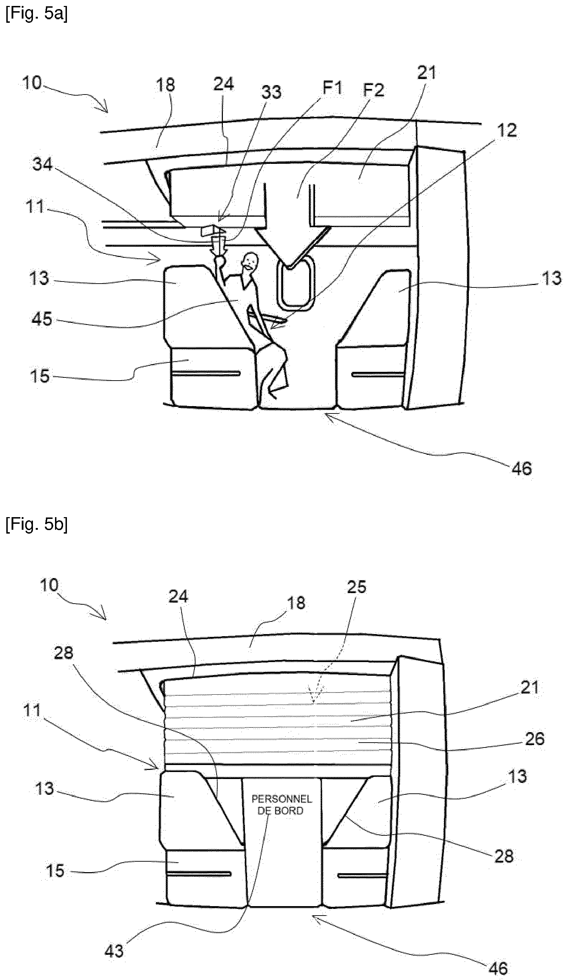

Comme on peut le voir sur la figure 5b, à l'état déployé, le rideau 21 est disposé majoritairement à l'extérieur du volume interne 22 et s'étend verticalement depuis le compartiment 18 de façon à délimiter au moins en partie un espace clos 25 de repos autour de l'unité de siège 11. Lorsque le rideau 21 est dans l'état déployé, les membres d'équipage peuvent se reposer sans être dérangés par les passagers de la cabine.

Le rideau 21 est apte à se déployer verticalement depuis le compartiment 18 jusqu'à un bord supérieur 28 de la coque 13 de siège 12 de sorte qu'au moins une portion d'une paroi 26 délimitant l'espace clos 25 de repos est formée en partie haute par le rideau 21 et en partie basse par la coque d'intimité 13.

Le rideau 21 présente de préférence une forme épousant celle du bord supérieur 28 de la coque 13 de l'unité de siège 11. En prévoyant ainsi une configuration sur-mesure adaptée à la forme de la coque 13 de l'unité de siège 11, l'invention permet de limiter au maximum les intrusions lumineuses à travers le rideau 21.

Comme cela est illustré par la figure 2, le rideau 21 pourra être lesté dans sa partie basse. A cet effet, on pourra disposer d'un ou plusieurs poids 30 à l'intérieur d'une doublure du rideau 21. Cela permet d'optimiser le déploiement du rideau 21, de minimiser les plis textiles, et de mieux épouser la forme de la coque 13 du siège 12.

Dans certaines zones où il n'y a pas de coque 13 de siège 12, le rideau 21 pourra s'étendre jusqu'au plancher de la cabine d'avion 10.

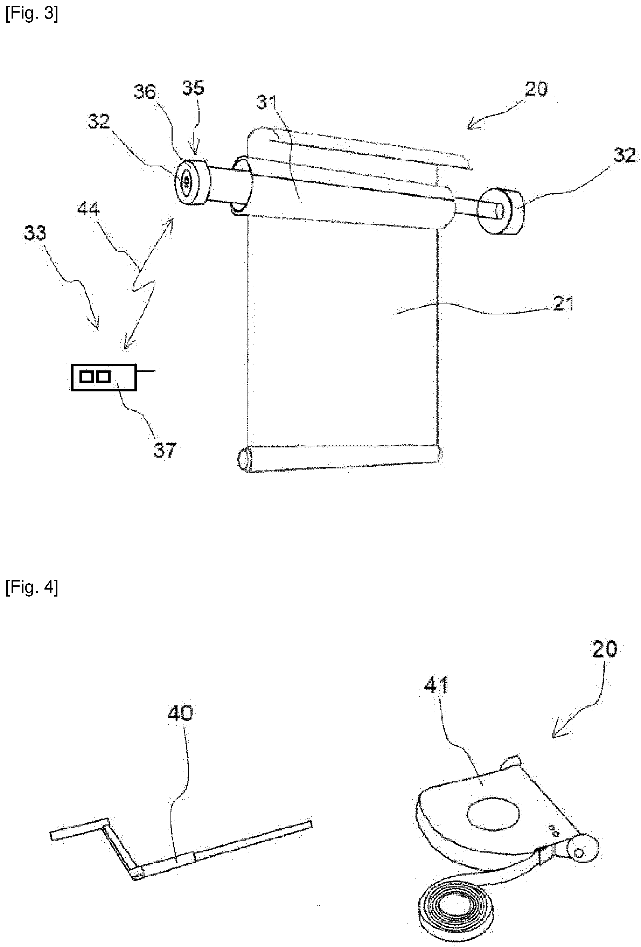

Suivant un mode de réalisation particulier montré sur la figure 3, le système de déploiement 20 comporte un enrouleur 31 autour duquel le rideau 21 est majoritairement enroulé à l'état stocké. A l'état déployé, le rideau 21 est majoritairement déroulé par rapport à l'enrouleur 31. L'enrouleur 31 comporte des interfaces de fixation 32 avec des parois internes du compartiment 18.

Un dispositif d'actionnement 33 est apte à déclencher le passage du rideau d'isolation 21 d'un état à l'autre. Suivant un exemple de réalisation illustré sur la figure 1, le dispositif d'actionnement 33 comporte une gâchette 34 à tirer pour faire passer le rideau d'isolation 21 de l'état stocké à l'état déployé. Il suffit ainsi au passager de s'assoir sur le siège 12 et de tirer la gâchette 34 afin d'actionner la descente du rideau 21. Cela permet de maximiser le confort et la vitesse de déploiement du rideau d'isolation 21 tout en ayant une solution simple et intuitive à l'emploi pour les membres d'équipage.

Comme cela est visible sur la figure 3, le dispositif d'actionnement 33 pourra comporter un système électrique 35 muni d'un moteur électrique 36 permettant au rideau 21 de descendre de façon automatique à l'état déployé et de remonter de façon automatique à l'état stocké.

Le système électrique 35 pourra être commandé par une télécommande 37 ou par un interrupteur 38 disposé à proximité du siège 12. La télécommande 37 permet au membre d'équipage d'actionner le rideau d'isolation 21 à distance via une liaison radiofréquence ou infra-rouge 44.

En variante, comme cela est montré sur la figure 4, on pourra utiliser une manivelle 40 associée à un enrouleur à sangle 41 relié au rideau 21 pour commander le déploiement manuel du rideau 21.

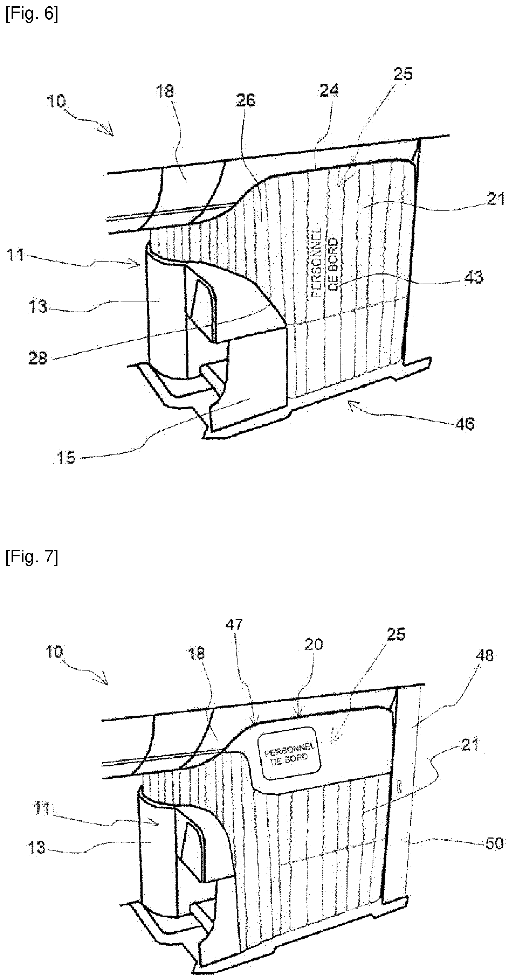

Le rideau d'isolation 21 est réalisé de préférence dans un matériau flexible, notamment un matériau textile. De préférence, le rideau 21 est réalisé dans un matériau occultant. Le matériau textile pourra être uniformément plissé afin de minimiser les plis disgracieux du rideau 21 dus au rangement. Le cas échéant, le rideau 21 pourra être réalisé dans un matériau rembourré, comme cela est le cas dans le mode de réalisation de la figure 6. Une telle configuration permet de mieux isoler du bruit et de la lumière et améliorer ainsi le confort des membres de l'équipage. En variante, le rideau 21 pourra être réalisé en cuir ou en simili cuir.

Comme cela est illustré par la figure 5b ou 6, le rideau 21 pourra comporter un marquage 43 sous forme d'un texte et/ou d'un symbole indiquant que le rideau 21 délimite un espace de repos réservé aux membres d'équipage. Cela permet de clarifier son utilité auprès des passagers.

Le rideau 21 est également personnalisable aux couleurs de la compagnie aérienne.

Le rideau 21 pourrait en variante être réalisé à partir d'une pluralité de panneaux allongés rigides articulés entre eux à la façon d'un volet roulant.

Les figures 5a et 5b illustrent le déploiement du rideau d'isolation 21 à l'aide du système 20. Lorsqu'il souhaite se reposer, un membre d'équipage 45 pourra prendre place sur le siège 12 de l'unité de siège 11. Le membre d'équipage 45 pourra ensuite commander la descente du rideau 21 via l'activation de la gâchette 34 mécanique (cf. flèche F1), ou de l'interrupteur 38 ou de la télécommande 37 dans le cas où le rideau 21 est assisté électriquement par le moteur 36. Le rideau d'isolation 21 descend verticalement en position déployée suivant la flèche F2.

Comme cela est illustré par la figure 5b, le rideau 21 à l'état déployé délimite alors avec la coque d'intimité 13 un espace clos 25 autour de l'unité de siège 11. Latéralement, la paroi 26 de l'espace clos 25 est formée en partie haute par le rideau 21 et en partie basse par la coque d'intimité 13. La forme du rideau 21 s'adapte à la hauteur variable de la coque d'intimité 13 en particulier dans des zones échancrées de la coque 13 situées de part et d'autre d'un passage d'accès 46 au couloir de circulation de la cabine d'avion. Le rideau 21 s'étend verticalement jusqu'au plancher de la cabine au niveau du passage d'accès 46 au couloir de circulation qui est alors obstrué par le rideau 21 occultant.

Dans le mode de réalisation de la figure 6, le rideau 21 est adapté à une unité de siège 11 présentant une autre configuration dans laquelle la coque d'intimité 13 comporte une pente d'un seul côté du passage d'accès 46.

Pour quitter l'espace de repos, il suffit au membre d'équipage 45 de remonter le rideau 21 à l'état stocké. Le remontage du rideau 21 pourra être effectué manuellement ou automatiquement via l'activation de l'interrupteur 38 ou de la télécommande 37.

Il sera également possible de prévoir une fermeture éclair dans le rideau 21 pour permettre au membre d'équipage 45 de sortir de l'espace clos 25 sans avoir à faire repasser le rideau 21 à l'état stocké.

Lorsque le rideau 21 est à l'état stocké, ce dernier se trouve de préférence complètement à l'intérieur du volume interne 22 du compartiment 18. Il n'y a alors aucune modification visible au sein de la cabine d'avion 10, de sorte que l'invention n'affecte pas l'aspect esthétique général de la cabine d'avion 10. En outre, aucun élément externe, tel qu'un rail, n'est susceptible de générer des problèmes de sécurité lors d'un crash.

En variante, le compartiment 18 situé en partie supérieure de la cabine d'avion 10 est un compartiment destiné à recevoir d'autres objets que des bagages. Le compartiment 18 pourra être dédié au système de déploiement 20.

Dans le mode de réalisation non revendiqué montré sur les figures 7, 8, 9 et 10, le système de déploiement 20 du rideau d'isolation 21 comporte au moins un rail de guidage 47 coopérant avec un bord supérieur du rideau d'isolation 21 et un compartiment de stockage vertical 48 délimitant un volume interne 50 à l'intérieur duquel est situé le rideau d'isolation 21 à l'état stocké.

A cet effet, le bord supérieur du rideau d'isolation 21 pourra être muni de guides de type anneaux, chariots, ou crochets coulissants coopérant avec le rail de guidage 47.

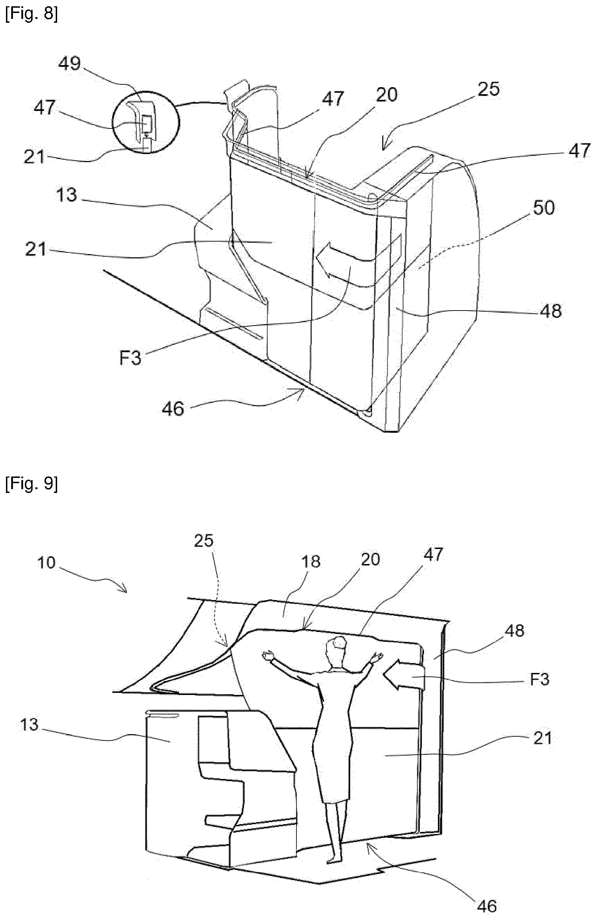

Le rail de guidage 47 est monté en partie supérieure de la cabine d'avion notamment sur le compartiment à bagages 18. Le rail de guidage 47 suit une forme de la coque d'intimité 13 située autour du siège 12 et s'étend jusqu'au compartiment de stockage vertical 48. Au moins une portion du rail de guidage 47 est située à l'intérieur du volume interne 50 du compartiment de stockage 48. De préférence, comme on peut le voir sur les figures 7 et 8, le rail de guidage 47 est monté à l'intérieur d'une rainure 49 de façon à être caché pour une personne située dans la cabine d'avion.

Le compartiment de stockage 48 s'étend longitudinalement suivant une direction verticale à l'intérieur de la cabine d'avion 10. Le compartiment de stockage 48 s'étend verticalement suivant une largeur du rideau d'isolation 21. Avantageusement, le compartiment de stockage vertical 48 est disposé au bout d'une rangée d'unités de sièges 11 de façon à pouvoir stocker discrètement le rideau d'isolation 21 dans son volume interne 50 sans compromettre l'aspect esthétique global de la cabine d'avion 10.

Comme cela est illustré par les figures 8 et 9, pour faire passer le rideau d'isolation 21 d'un état stocké à l'intérieur du volume interne 50 du compartiment de stockage vertical 48 à un état déployé, un membre d'équipage 45 pourra tirer latéralement le rideau d'isolation 21 suivant la flèche de déploiement F3. A l'état déployé, le rideau d'isolation 21 se situe majoritairement à l'extérieur du volume interne 50 du compartiment de stockage 48. Le rideau d'isolation 21 entoure alors en partie le siège 12 en fermant notamment le passage d'accès 46 au couloir de circulation de la cabine d'avion 10 de façon à délimiter l'espace clos 25.

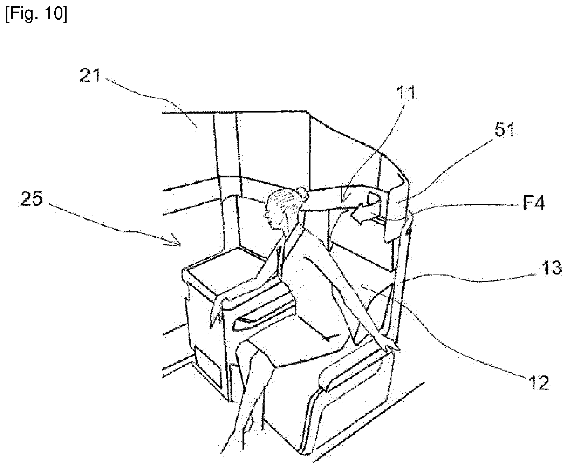

Le membre d'équipage 45 pourra fermer le rideau depuis l'intérieur de l'espace clos 25 ainsi créé, tel que cela est montré sur la figure 10. A cette fin, un rebord 51 du rideau d'isolation 21 pourra être fixé suivant la flèche F4 sur une paroi à l'aide d'attaches auto-agrippantes de type Velcro (Marque déposée) ou d'un système à aimant.

En variante, le déploiement du rideau d'isolation 21 pourra être automatique. A cet effet, le rideau d'isolation 21 pourra être monté sur un chariot entraîné électriquement et activable par exemple au moyen d'un bouton situé à proximité du siège 12 ou d'une télécommande.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres, dans la mesure où elles s'inscrivent dans le cadre des revendications annexées.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association, dans la mesure où elles s'inscrivent dans le cadre des revendications annexées.

## Revendications

1. Ensemble pour une cabine d'aéronef (10) comportant:
- au moins une unité de siège (11) comportant un siège (12) et une coque d'intimité (13) s'étendant au moins en partie autour du siège (12),
- au moins un rideau d'isolation (21), et
- un compartiment de stockage (18, 48) délimitant un volume interne (22, 50), ledit ensemble comportant en outre un système de déploiement (20) du rideau d'isolation (21),
- ledit système de déploiement (20) du rideau d'isolation (21) étant configuré pour faire prendre sélectivement au rideau d'isolation (21):
- un état stocké dans lequel ledit rideau d'isolation (21) est disposé majoritairement à l'intérieur du volume interne (22, 50) du compartiment de stockage (18), et
- un état déployé dans lequel ledit rideau d'isolation (21) est disposé majoritairement à l'extérieur du volume interne (22, 50) du compartiment de stockage (18) de façon à délimiter au moins en partie un espace clos (25) de repos autour de l'unité de siège (11),
- le compartiment de stockage (18) étant configuré pour être situé en partie supérieure de ladite cabine d'aéronef, le système de déploiement (20) du rideau d'isolation (21) est disposé à l'intérieur du volume interne (22) du compartiment de stockage (18) de sorte qu'à l'état déployé, le rideau d'isolation (21) s'étend verticalement depuis le compartiment de stockage (18) de façon à délimiter au moins en partie l'espace clos (25),
**caractérisé en ce que**:
- le rideau d'isolation (21) est apte à se déployer verticalement depuis le compartiment de stockage (18) jusqu'à un bord supérieur (28) de la coque d'intimité (13), de sorte qu'au moins une portion d'une paroi (26) délimitant l'espace clos (25) est formée en partie haute par le rideau d'isolation (21) et en partie basse par la coque d'intimité (13).

2. Ensemble selon la revendication 1, **caractérisé en ce que** le rideau d'isolation (21) présente une forme épousant celle du bord supérieur (28) de la coque d'intimité (13).

3. Ensemble selon la revendication 1 ou 2, **caractérisé en ce que** le système de déploiement (20) comporte un enrouleur (31) autour duquel le rideau d'isolation (21) est majoritairement enroulé à l'état stocké.

4. Ensemble selon l'une quelconque des revendications 1 à 3, **caractérisé en ce qu'**un dispositif d'actionnement (33) est apte à déclencher le passage du rideau d'isolation (21) d'un état à l'autre.

5. Ensemble selon la revendication 4, **caractérisé en ce que** le dispositif d'actionnement (33) comporte un système électrique (35) muni d'un moteur électrique (36) permettant au rideau d'isolation (21) de descendre de façon automatique à l'état déployé et de remonter de façon automatique à l'état stocké, ledit système électrique (35) étant apte à être commandé par un interrupteur (38) disposé à proximité du siège (12) ou par une télécommande (37).

6. Ensemble selon l'une quelconque des revendications 1 à 5, **caractérisé en ce que** le rideau d'isolation (21) comporte un marquage (43) sous forme d'un texte et/ou d'un symbole indiquant que le rideau d'isolation (21) délimite un espace de repos réservé à des membres d'équipage.

## Patentansprüche

1. Anordnung für eine Flugzeugkabine (10), mit:
- mindestens einer Sitzeinheit (11) aus einem Sitz (12) und einer sich zumindest teilweise um den Sitz (12) erstreckenden Sichtschutzschale (13),
- mindestens einem Isolationsvorhang (21),
- einem Stauraum (18, 48), das ein Innenvolumen (22, 50) abgrenzt, wobei die Anordnung ferner ein Ausfahrsystem (20) für den Isolationsvorhang (21) umfasst,
- wobei das Ausfahrsystem (20) für den Isolationsvorhang (21) so konfiguriert ist, dass der Isolationsvorhang (21) selektiv aufnehmen kann:
- einen gestauten Zustand, in dem sich der Isolationsvorhang (21) überwiegend innerhalb des Innenvolumens (22, 50) des Stauraums (18) angeordnet ist, und
- einen ausgefahrenen Zustand, in dem der Isolationsvorhang (21) überwiegend außerhalb des Innenraums (22, 50) des Stauraums (18) angeordnet ist, um zumindest teilweise einen geschlossenen Ruheraum (25) um die Sitzeinheit (11) abzugrenzen,
- wobei der Stauraum (18) im oberen Teil der Flugzeugkabine angeordnet ist, wobei das Ausfahrsystem (20) für den Isolationsvorhang (21) innerhalb des Innenvolumens (22) des Stauraums (18) so angeordnet ist, dass sich der Isolationsvorhang (21) im ausgefahrenen Zustand vertikal aus dem Stauraum (18) erstreckt, um zumindest teilweise den geschlossenen Ruheraum (25) abzugrenzen,
**dadurch gekennzeichnet, dass**:
- der Isolationsvorhang (21) von dem Stauraum (18) bis zur Oberkante (28) der Sichtschutzschale (13) vertikal ausgefahren werden kann, sodass mindestens ein Teil einer den geschlossenen Ruheraum (25) abgrenzenden Wand (26) im oberen Teil durch den Isolationsvorhang (21) und im unteren Teil durch die Sichtschutzschale (13) gebildet wird.

2. Anordnung nach Anspruch 1, **dadurch gekennzeichnet, dass** der Isolationsvorhang (21) eine Form aufweist, die sich der Form der Oberkante (28) der Sichtschutzschale (13) anpasst.

3. Anordnung nach Anspruch 1 oder 2, **dadurch gekennzeichnet, dass** das Ausfahrsystem (20) einen Wickler (31) umfasst, um den der Isolationsvorhang (21) im gestauten Zustand überwiegend aufgewickelt ist.

4. Anordnung nach einem der Ansprüche 1 bis 3, **dadurch gekennzeichnet, dass** eine Betätigungsvorrichtung (33) in der Lage ist, den Übergang des Isolationsvorhangs (21) von einem Zustand in einen anderen auszulösen.

5. Anordnung nach Anspruch 4, **dadurch gekennzeichnet, dass** die Betätigungsvorrichtung (33) ein elektrisches System (35) umfasst, das mit einem Elektromotor (36) verseht ist, der es dem Isolationsvorhang (21) ermöglicht, automatisch in den ausgefahrenen Zustand abzusenken und automatisch in den gestauten Zustand anzuheben, wobei das elektrische System (35) durch einen Schalter (38) in der Nähe des Sitzes (12) oder durch eine Fernsteuerung (37) gesteuert werden kann.

6. Anordnung nach einem der Ansprüche 1 bis 5, **dadurch gekennzeichnet, dass** der Isolationsvorhang (21) eine Kennzeichnung (43) in Form eines Textes und/oder eines Symbols aufweist, die darauf hinweist, dass der Isolationsvorhang (21) einen Ruheraum für Besatzungsmitglieder abgrenzt.

## Claims

1. An assembly for an aircraft cabin (10), comprising:
- at least one seat unit (11) comprising a seat (12) and a privacy shell (13) extending at least partially around the seat (12),
- at least one isolation curtain (21), and
- a storage compartment (18, 48) delimiting an internal volume (22, 50), said assembly further comprising a deployment system (20) for the isolation curtain (21),
- said deployment system (20) for the isolation curtain (21) being so configured that the isolation curtain (21) can selectively take:
- a stored state in which said isolation curtain (21) is predominantly disposed inside the internal volume (22, 50) of the storage compartment (18), and
- a deployed state in which said isolation curtain (21) is predominantly arranged outside the internal volume (22, 50) of the storage compartment (18) so as to delimit at least in part an enclosed resting space (25) around the seat unit (11),
- the storage compartment (18) being configured to be located in the upper part of said aircraft cabin, the deployment system (20) for the isolation curtain (21) is disposed inside the internal volume (22) of the storage compartment (18) so that in the deployed state, the isolation curtain (21) extends vertically from the storage compartment (18) so as to delimit at least in part the enclosed space (25),
**characterized in that**:
- the isolation curtain (21) is able to be vertically deployed from the storage compartment (18) up to an upper edge (28) of the privacy shell (13), so that at least a portion of a wall (26) delimiting the enclosed space (25) is formed in the upper part by the isolation curtain (21) and in the lower part by the privacy shell (13).

2. The assembly according to claim 1, **characterized in that** the isolation curtain (21) has a shape conforming to that of the upper edge (28) of the privacy shell (13).

3. The assembly according to claim 1 or 2, **characterized in that** the deployment system (20) comprises a winder (31) around which the isolation curtain (21) is predominantly wound in the stored state.

4. The assembly according to any one of the claims 1 to 3, **characterized in that** an actuation device (33) is capable of triggering the passage of the isolation curtain (21) from one state to another.

5. The assembly according to claim 4, **characterized in that** the actuation device (33) comprises an electrical system (35) equipped with an electric motor (36) enabling the isolation curtain (21) to automatically descend down to the deployed state and to automatically rise up to the stored state, said electrical system (35) being capable of being controlled by a switch (38) near the seat (12) or by a remote control (37).

6. The assembly according to any one of the claims 1 to 5, **characterized in that** the isolation curtain (21) has a marking (43) in the form of a text and/or a symbol indicating that the isolation curtain (21) delimits a resting area for staff members.
